(19) Europäisches Patentamt
European Patent Office
Office européen des brevets

(11) Veröffentlichungsnummer: **0 210 972**
**A1**

(12) **EUROPÄISCHE PATENTANMELDUNG**

(21) Anmeldenummer: 86890131.5

(22) Anmeldetag: 07.05.86

(51) Int. Cl.⁴: **C09K 3/18**

(30) Priorität: 08.05.85 AT 1386/85

(43) Veröffentlichungstag der Anmeldung:
04.02.87 Patentblatt 87/06

(84) Benannte Vertragsstaaten:
AT BE CH DE FR GB IT LI LU NL SE

(71) Anmelder: SAVECO TECHNOLOGY
ASSOCIATES LIMITED
29/30 Fitzroy Square
London W1P 5HH(GB)

(72) Erfinder: Kraljevic, Gojko, Dr. Dipl.-Ing.
Njegoseva 9
11000 Belgrad(YU)

(74) Vertreter: Kliment, Peter, Dipl.-Ing. Mag.-jur.
Singerstrasse 8
A-1010 Wien(AT)

(54) Verfahren zur Behandlung von Zeolithen.

(57) Die Erfindung betrifft Mittel zur Enteisung sowie zur vorbeugenden Verhinderung von Glatteisbildung und Schneeglätte sowie Verfahren zur Herstellung solcher Mittel. Diese Mittel enthalten einen Zeolithen sowie ein den Gefrierpunkt des Wassers herabsetzendes Mittel und allenfalls zusätzlich noch bekannte Streusalze. Die Verwendung erfindungsgemäßer Mittel bietet zahlreiche Vorteile, die insbesondere darauf beruhen, daß die Zeolithe Schmutz, Staub, Öl und schädliche Kraftfahrzeugabgase sowie $SO_2$ abbinden und somit umweltfreundlich sind.

EP 0 210 972 A1

## Verfahren zur Behandlung von Zeolithen

Die Erfindung betrifft ein Verfahren zur Behandlung von Zeolithen und Mittel zur Enteisung sowie zur vorbeugenden Verhinderung von Glatteisbildung und Schneeglätte.

Zur verkehrstechnischen Betreuung von Straßen im Winter wurde auf diesen meist Steinsalz, Steinsalz gemischt mit Kalziumchlorid und Magnesiumchlorid, Asche, Sand und/oder Splitt gestreut. Streumittel dieser Art haben jedoch sehr wesentliche Nachteile. Die verwendeten Salze sind korrosionsfördernd und alle genannten Streumittel - schädigen Kraftfahrzeuge, Straßenoberflächen und die sie umgebende Umwelt, sind ferner - schmutzund/oder staubbildend und somit umweltfeindlich.

Ziel der Erfindung ist die Schaffung eines umweltfreundlichen, sehr wirksamen Mittels zur Enteisung und zur Beseitigung von Glatteis und Schneeglätte, das keinen der vorstehend angeführten Nachteile aufweist.

Das erfindungsgemäße Mittel zur Enteisung sowie zur vorbeugenden Verhinderung von Glatteisbildung und Schneeglätte ist dadurch gekennzeichnet, daß es einen zur Verbesserung seiner Austauschfähigkeit teilweise entwässerten, Kalzium und Magnesium enthaltenden Zeolithen mit einem Gehalt von etwa 60 bis 70 % $SiO_2$ und 10 bis 20 % $Al_2O_3$, vorzugsweise 10 bis 16 % $Al_2O_3$, sowie ein den Gefrierpunkt des Wassers herabsetzendes Mittel, wie Glykol, und/oder Essigsäure oder Formaldehyd enthält. Gewünschtenfalls kann es zusätzlich ein bekanntes Streusalz, insbesondere Steinsalz enthalten.

Die Verwendung der erfindungsgemäßen Mittel bietet folgende Vorteile:

Der Einsatz von vorstehend genannten umweltfeindlichen, bisher verwendeten Streumitteln erübrigt sich;

die behandelten Zeolithe binden Schmutz, Staub und Öl, verursachen keine Korrosion und schonen somit Fahrzeuge und Straßenoberflächen;

sie absorbieren schädliche Kraftfahrzeugabgase und auch $SO_2$ und dienen daher der Luftreinigung;

sie absorbieren Stickstoff aus der Luft und geben diesen wieder ab, sodaß deren Verwendung auf Straßen und Wegen für an diese Straßen oder Wege angrenzende Grünflächen oder Wälder auch als Biodünger dient.

Diese Vorteile zeigen den großen Wert der erfindungsgemäßen Mittel zur Enteisung und zur Verhinderung von Glatteisbildung und Schneeglätte.

Die Wirkungsdauer dieser Mittel beträgt beachtlicherweise 30 bis 40 Tage bei Temperaturen von bis zu -38°C. Die behandelten Zeolithe könne als solche oder, insbesondere aus wirtschaftlichen Gründen, auch gemischt mit Steinsalz eingesetzt werden. Bei einem Mischverhältnis von 1 : 1 wirkt das in diesem Gemisch befindliche Salz nicht mehr korrodierend, wobei allerdings ein solches Gemisch nur bis zu Temperaturen von -25°C wirksam ist.

Die Verwendbarkeit der behandelten Zeolithe und solcher Streumaterialien ist nicht auf Fahr-und Gehwege beschränkt, sie erstreckt sich z.B. auch auf Flughäfen, Bahnhöfe, Tankstellen, Parkplätze, Brücken und die Entfernung von auf Stiegen und in Dachrinnen gebildetem Eis. Bei Verwendung auf Flughäfen erfolgt die Streuung dieser Mittel zur Verhinderung von Glatteisbildung und Schneeglätte vorzugsweise dann, wenn laut Wettervorhersage die Temperatur auf oder unter den Gefrierpunkt sinken soll. Die Korngröße dieser Streumaterialien liegt vorzugsweise bei etwa 1 bis 2 mm.

Das erfindungsgemäße Verfahren zur Behandlung von Kalzium und Magnesium enthaltenden Zeolithen mit einem Gehalt von etwa 60 bis 70 % $SiO_2$ und etwa 10 bis 20 % $Al_2O_3$, vorzugsweise 10 bis 16 % $Al_2O_3$, insbesondere zwecks Verwendung derselben als Mittel zur Enteisung sowie zur vorbeugenden Verhinderung von Glatteisbildung und Schneeglätte, ist dadurch gekennzeichnet, daß man den Feuchtigkeitsgehalt des Zeoliths durch Er hitzen auf 1 bis 4 %, vorzugsweise 1 bis 2 % bringt und den so getrockneten Zeolith mit einem Alkalisalz, vorzugsweise Glaubersalz, mit Glykol, Formaldehyd, Essigsäure oder Essigsäure und Glykol und mit Wasser, vorzugsweise Meerwasser, mischt.

Eine bevorzugte Ausführungsweise dieses Verfahrens besteht darin, daß man den Zeolith auf etwa 180°C erhitzt und dann mit 25 bis 35 Gew.-%, vorzugsweise 30 Gew.-% Glaubersalz, 1 bis 3 Gew.-%, vorzugsweise 1,6 Gew.-% Glykol und 10 bis 15 Gew.-% mit 4 Gew.-% Meersalz angereichertem Wasser, vorzugsweise Meerwasser, mischt.

Eine Variante des erfindungsgemäßen Verfahrens besteht darin, daß man den Feuchtigkeitsgehalt des Zeoliths durch Erhitzen auf 1 bis 4 % vorzugsweise 1 bis 2 % bringt und den so getrockneten Zeolith mit Essigsäure , der Glykol zugesetzt sein kann, und Wasser, vorzugsweise Meerwasser, mischt.

Eine bevorzugte Ausführungsweise dieses Verfahrens ist dadurch gekennzeichnet, daß man den Zeolith auf etwa 180°C erhitzt und dann mit, bezogen auf den Zeolith, 15 -25 Vol.% konzentrierter Essigsäure und 30 Gew.% Alkalisalze, z.B. entwässertes, kristallines Glaubersalz, mischt.

Erfindungsgemäß verwendbare Zeolithe sind z.B. in Jugoslawien vorkommende Clinoptilolithe mit folgender perzentieller Zusammensetzung:

$SiO_2$ 61,96 bis 67,17

$TiO_2$ 0,15 bis 0,23

$Al_2O_3$ 12,46 bis 15,20

$Fe_2O_3$ 0,98 bis 2,05

MnO Spuren bis 0,05

MgO 1,30 bis 1,96

CaO 3,03 bis 4,35

$Na_2O$ 0,70 bis 1,11

$K_2O$ 0,78 bis 1,32

$H_2O$ -Verlust (100°C) 4,05 bis 4,74

$H_2O$-Verlust (1000°C) 7,56 bis 9,56

Es können aber auch verschiedene andere Zeolithe erfindungsgemäß behandelt werden, wie z.B. Clinoptilolithe mit etwa folgender perzentueller Zusammensetzung:

$SiO_2$ 61 bis 71

$Al_2O_3$ 10 bis 11

$Fe_2O_3$ 0,8 bis 0,9

CaO 2,4 bis 3,4

MgO 0,4 bis 0,6

$Na_2O$ 1,5 bis 5,3

$K_2O$ 1,5 bis 4,0

Mikroelemente wie Mn, Sn, Zn, B, Ti insgesamt bis 1 %

Kristallwasser 8,3 bis 8,7

Das erfindungsgemäße Verfahren kann wie folgt ausgeführt werden. Ausgangsprodukt ist ein Zeolith, dessen Wassergehalt auf etwa 2 % gebracht wurde.

Beispiel 1: Der Zeolith wird in einer Mischvorrichtung mit einer, bezogen auf den Zeolith, 15 Gew.-% Meerwasser und 1,6 Gew.-% Glykol enthaltenden Mischung durch 3 bis 5 Minuten während des Rührens gesättigt. Hiebei ändert sich die Farbe des Zeoliths von hellgelb zu grünbraun. Dann wird 30 Gew.-% Glaubersalz eingebracht und weitere 3 Minuten, z.B. in einem Schneckenmischer, gründlich trocken gemischt. An Stelle von Glaubersalz kann im gleichen Gewichtsverhältnis Natrium-oder Kaliumchlorid eingesetzt werden.

Beispiel 2: Der Zeolith wird in einer Mischvorrichtung 2 bis 3 Minuten mit, bezogen auf den Zeolith, 15 Vol.-%, 96 % Essigsäure gemischt. Dieser Mischung wird 30 Gew.-% entwässertes, kristallines Glaubersalz zugesetzt. Die nach dem erfindungsgemäßen Verfahren behandelten Zeolithe sind mit Vorteil als Mittel zur Enteisung sowie zur vorbeugenden Verhinderung von Glatteisbildung und Schneeglätte verwendbar.

**Ansprüche**

1. Mittel zur Enteisung sowie zur vorbeugenden Verhinderung von Glatteisbildung und Schneeglätte,

dadurch gekennzeichnet,

daß es einen zur Verbesserung seiner Austauschfähigkeit teilweise entwässerten, Kalzium und Magnesium enthaltenden Zeolithen mit einem Gehalt von etwa 60 bis 70 % $SiO_2$ und 10 bis 20 % $Al_2O_3$, vorzugsweise 10 bis 16 % $Al_2O_3$, sowie ein oder mehrere den Gefrierpunkt des Wasser herabsetzende(s) Mittel, wie Glykol, Essigsäure, eine Mischung von Glykol und Essigsäure oder Formaldehyd enthält.

2. Mittel nach Anspruch 1,

dadurch gekennzeichnet,

daß es zusätzlich ein bekanntes Streusalz, insbesondere Steinsalz, vorzugsweise, im Verhältnis 1 : 1 enthält.

3. Verfahren zur Behandlung von Kalzium und Magnesium enthaltenden Zeolithen mit einem Gehalt von etwa 60 bis 70 % $SiO_2$ und 10 bis 20 % $Al_2O_3$, vorzugsweise 10 bis 16 % $Al_2O_3$, insbesondere zwecks Verwendung derselben als Mittel zur Enteisung sowie zur vorbeugenden Verhinderung von Glatteisbildung und Schneeglätte,

dadurch gekennzeichnet,

daß man den Feuchtigkeitsgehalt des Zeoliths durch Erhitzen auf 1 bis 4 %, vorzugsweise 1 bis 2 % bringt und den so getrockneten Zeolith mit einem Alkalisalz, vorzugsweise Glaubersalz, mit Glykol, Essigsäure oder einer Mischung von Essigsäure und Glykol, oder Formaldehyd und mit Wasser, vorzugsweise Meerwasser, mischt.

4. Verfahren nach Anspruch 3,

dadurch gekennzeichnet,

daß man den Zeolith auf etwa 180°C erhitzt und dann mit 25 bis 35 Gew.-%, vorzugsweise 30 Gew.-% Glaubersalz, 1 bis 3 Gew.-%, vorzugsweise 1,6 Gew.-% Glykol und 10 bis 15 Gew.-% mit 4 Gew.-% Meersalzen angereichertem Wasser, vorzugsweise Meerwasser, mischt.

5. Verfahren zur Behandlung von Kalzium und Magnesium enthaltenden Zeolithen mit einem Gehalt von etwa 60 bis 70 % $SiO_2$ und 10 bis 20 % $Al_2O_3$, vorzugsweise 10 bis 16 % $Al_2O_3$, insbesondere zwecks Verwendung derselben als Mittel zur Enteisung sowie zur vorbeugenden Verhinderung von Glatteisbildung und Schneeglätte,

dadurch gekennzeichnet,

daß man den Feuchtigkeitsgehalt des Zeoliths durch Erhitzen auf 1 bis 4 %, vorzugsweise 1 bis 2 % bringt und den so getrockneten Zeolith mit konzentrierter Essigsäure z.B. etwa 96%iger Essigsäure und einem Alkalisalz, vorzugsweise Glaubersalz, mischt.

6. Verfahren nach Anspruch 5,

dadurch gekennzeichnet,

daß man den Zeolith auf etwa 180°C erhitzt und dann, bezogen auf den Zeolithen, mit 15 bis 25 Vol.% Essigsäure und 25 bis 35 Gew.-% wasserfreiem, kristallinem Glaubersalz mischt.

7. Verfahren nach einem der Ansprüche 1 bis 6,

dadurch gekennzeichnet,

daß man als Zeolithen einen Clinoptilolith mit folgenden Merkmalen einsetzt:

$SiO_2$ 61,96 bis 67,17

$TiO_2$ 0,15 bis 0,23

$Al_2O_3$ 12,46 bis 15,20

$Fe_2O_3$ 0,98 bis 2,05

MnO Spuren bis 0,05

MgO 1,30 bis 1,96

CaO 3,03 bis 4,35

$Na_2O$ 0,70 bis 1,11

$K_2O$ 0,78 bis 1,32

$H_2O$ -Verlust (100°C) 4,05 bis 4,74

$H_2O$-Verlust (1000°C) 7,56 bis 9,56

8. Verwendung eines nach einem der Ansprüche 3 bis 7, behandelten Zeolithen gemeinsam mit bekanntem Streusalz, insbesondere Steinsalz, vorzugsweise im Verhältnis von 1 : 1, als Mittel zur Enteisung sowie zur vorbeugenden Verhinderung von Glatteisbildung und Schneeglätte.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-2 249 835 (DEUTSCHE GOLD- UND SILBER-SCHEIDEANSTALT)<br>* Seite 1, Zeilen 1-3,36-39; Seite 2, Zeilen 1-19,34-39; Seite 3, Zeilen 1-23 * | 1 | C 09 K 3/18<br>C 01 B 33/28 |
| | --- | | |
| A | FR-A-2 488 587 (TOYO SODA MANUFACT.)<br>* Seite 1, Zeilen 1-22; Seite 2, Zeilen 11-37; Ansprüche 1-11 * | 1 | |
| | ----- | | |

**RECHERCHIERTE SACHGEBIETE (Int. Cl.4)**

C 09 K
C 01 B

Der vorliegende Recherchenbericht wurde für alle Patentansprüche erstellt.

| Recherchenort | Abschlußdatum der Recherche | Prüfer |
|---|---|---|
| DEN HAAG | 15-09-1986 | BOULON A.F.J. |